# EUROPEAN PATENT APPLICATION

(11) **EP 2 145 746 A1**
(43) Date of publication of application: **20.01.2010**
(21) Application number: 08160526.3
(22) Date of filing: 16.07.2008
(51) Int. Cl.: B29C 45/00, B29C 45/56

(54) **Method of manufacturing a plastic package in a mold**

(71) Applicant: I-Pac Patents B.V., 2909 LC Capelle a/d IJssel (NL)
(72) Inventor: Langerak, Alfred, 3271 Am Mijnsheerenland (NL)
(74) Representative: Hatzmann, Martin

(57) **Abstract**

Method of manufacturing a plastic package (1) in a mold, wherein the package comprises a first (2) and second (3) closing part of which at least one comprises a cavity for receiving a product such that in use the closing parts enclose the packaged product, wherein the mold comprises a mold cavity (20) arranged for molding said product, wherein in the mold cavity an amount of plastic is introduced in substantially plastic condition, whereupon at least one moveable element (24) to be called a slide (24) is moved at least partly into the respective mold cavity (20) while compressing and/or displacing at least part of the plastic, while the speed of movement of the at least one slide (24) is so high that adiabatic heat development occurs in the plastic, such that the plastic becomes more liquid, at least its viscosity is decreased, and the temperature of the plastic is brought back to approximately the melting temperature thereof.

## Description

The invention relates to a method of manufacturing a plastic package in a mold.

In particular, the invention relates to a method of manufacturing a package for products such as consumer packages, suitable for display in a shop or a similar sales space, or sale via sales channels such as mail order companies and the like.

Conventionally, relatively small products such as consumer articles, for instance memory chips, memory sticks, batteries, cards, glue and the like may be packaged in blister packages. Usually, blister packages have a relatively small wall thickness, and are manufactured from plastic, wherein the package encloses a product between two parts hinging relative to each other. For example, the outer dimensions of such a package are large such that, in order to prevent theft, the package is prevented from being too easily slid into a trouser pocket or the like. In different embodiments, such a package is provided with, for instance, a cardboard insert sheet for product information.

Further, blister packages are often formed by thin, cover-shaped parts from plastic, formed through vacuum formation, which are arranged on or around an end sheet, for instance with glue, staples or through form-closing. Such packages have as a drawback that they are not manufactured from one material and may therefore lead to waste problems, in particular with consumers.

It has been proposed to manufacture packages of a blister package type by injection molding, wherein two closing parts are connected by integrally formed hinge element. In at least one closing part, a suspension means such as an opening or hooking element is then provided, in at least the other closing part a cavity for forming a receiving cavity. In the receiving cavity a product can be enclosed. The resulting package of the injection molding process may however have relatively thick walls. For example, it may be difficult to hinge the hinge element because it is too thick and/or the hinge-element may even break.

It is an object of the invention to provide for an alternative method of forming a package and/or an alternative packages, as compared to conventional forming methods and packages.

This and/or other objects may be achieved by a method according to claim 1.

By compressing the plastic in the mold cavity by moving the slide with high speed according to the invention, predetermined wall thicknesses can be achieved for packages such as a blister packages in a controlled manner and with predetermined material properties. Preferably thin wall thicknesses can be achieved while the plastic is spread along the mold cavity, without applying very high pressures. Preferably a method such as for example is disclosed in WO2004/024416 is used to produce the package.

With such a method the wall thickness of a package such as a blister package can be made to be very thin, entirely and/or locally, e.g. to produce undercuts in the package, which undercuts may for example provide for living hinges and/or tearing lines. Because of the predetermined material properties it may be prevented that hinges comprising undercuts will break during a hinging action, e.g. during closing of the package when packaging the product.

Varying wall thicknesses may be achieved in a controlled manner with a method according to the invention. For example, also thicker parts can be formed in the same package, for example for forming notches and/or for forming tamper proof closing elements which will withstand breakage when a person attempts to disconnected them. Hence, with a method according to the invention blister packages can be lighter shaped and/or have improved hinging means and/or are more secure, while maintaining, or even improving, design freedom.

As mentioned, in an embodiment the method provides for tamper proof closing elements. For example, snapping notches may be used to connect two closing parts of the package. These tamper proof closing elements cannot be disconnected without breaking a part of the package. In this way it is evident when the package has been tampered with because the package would show a crack or deformation or the like. In another embodiment, locally reduced wall thicknesses such as undercuts and/or perforations may be provided, for example for achieving a predetermined location for breaking, tearing and/or deforming the package when trying to open it. For example, by arranging the package with such a relatively thin wall thickness, for example near the notch, a predetermined breaking or tearing line can be achieved along which a user will break the package when opening it. Preferably, the security of the package when it is presented in a shop is maintained so that still force and/or noise is needed to open, i.e. locally break or tear, the package.

In clarification of the invention, embodiments thereof will be further elucidated with reference to the drawing. In the drawing:
Fig. 1 shows a package according to the invention, in perspective view;
Fig. 2 shows a package comparable to the one shown in Figs. 1 and 2, in side view;
Fig. 3 shows a package according to Fig. 3, in cross-sectional side view;
Fig. 4 shows a package comparable to the one shown in Figs. 1 - 3, in front view;
Fig. 5 shows a cross-sectional front view of an embodiment of tamper proof closing elements;
Fig. 6A and 6B show cross-sectional details in front view of a package comprising undercuts;
Fig. 7 - 9 show cross sectional front views of an apparatus for performing different steps of a manufacturing method according to the invention;
Fig. 10 shows a top view of a mold part with a slide for manufacturing a package, for use in a method according to the invention.

In this description, identical or corresponding parts have identical or corresponding reference numerals. The exemplary embodiments shown should not be construed to be limitative in any manner and serve merely as illustration. It will be clear that, naturally, many different representations of packages according to the invention are possible, with associated molds. The outer contours of, for instance, closing parts, receiving cavities, the layout of, for instance, printing and the like can, naturally, be substantially freely chosen within the invention.

Preferably, a package that is manufactured according to the invention is substantially molded from transparent plastic, for instance polyethylene, poly propylene, polystyrene, ABS, P. E. T. or the like, which plastics should not be construed to be limitative in any manner. Also non-transparent, opaque materials can be used or a combination of materials can be used, for instance by 2K injection molding techniques. In the description, mainly a single injection molding mold for 1K injection molding will be described.

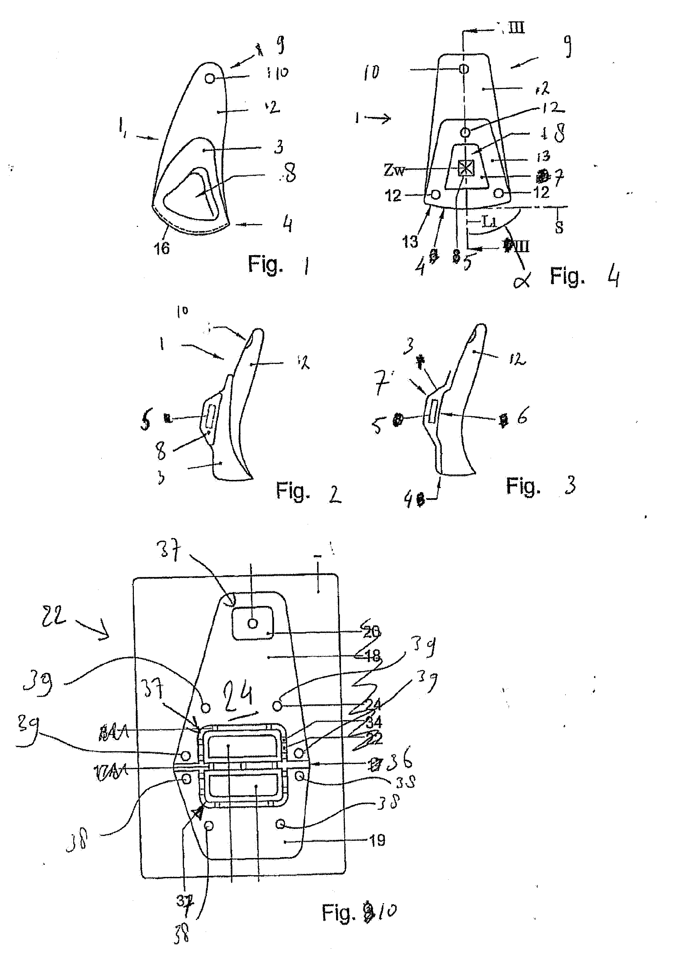

Fig. 1 shows a package 1, in particular a blister package 1, that can be manufactured according to a method according to the invention. The package 1 comprises a first closing part 2 and, connected thereto via hinge 4, a second closing part 3, made of plastic. The hinge 4 for instance comprises an integrally injection molded living hinge 4 and/or may comprise an integrally molded continuous film hinge 4. In an embodiment the hinge 4 comprises relatively narrow strips, for example so that the hinge 4 may function when the closing parts 2, 3 are curved. The end package 1 may also comprise other material than plastic such as paper and/or card board, for example for presenting product information. For example, such additional information that is presented on a card or paper or the like can be integrally molded in the package 1 with the use of in-mould labelling, which technique is for example described in European patent EP1212182.

In Figs. 2 and 3, in side view and cross-sectional side view, respectively, a package 1 according to the invention is shown with a product 5 confined therein, for instance an electronic component, or glue or the like. The product 5 is for example relatively small of dimension and relatively expensive. The package 1 in contrast is relatively large so that it cannot simply be slit into, for instance, a trouser pocket, or so that there is additional space for additional product information, such as branding or user manuals, within or on the package 1.

As clearly appears, the first closing part 2 and the second closing part 3 may each comprise a deformation 6, 7 such that therebetween, a receiving cavity 8 is enclosed if the closing parts 2, 3 are moved against each other, as shown in Figs. 1 - 4. It will be clear that such a deformation 6, 7 can also be provided in only one closing part 2, 3 or that these deformation can be provided in opposite directions.

In the exemplary embodiments shown, in the first closing part 2, adjacent an upper end 9 thereof, a suspension means 10 is provided in the form of an opening. However, the suspension means 10 can also be designed in a different manner, for instance in the form of a hook, loop or the like.

The deformations 6 and 7 are adjusted to, inter alia, the product 5 to be packaged, both in form and in dimension and, optionally, in position relative to the respective closing part 2, 3. As shown in Fig. 4, in this embodiment, the suspension means 10 is located on a line L₁ on which, also, the center of gravity Zw of the product 5 is located and which line L₁ includes an angle α with a hinge line S which is defined by the hinge 4. In the embodiment shown, the angle α is approximately 90°. It will be clear that if a different product 5 is to be packaged in a package 1, at least the receiving cavity 8 and, hence, the deformations 6 and/or 7 are to be adjusted, while the centre of gravity Zw will move relative to the position shown in Fig. 4, and therefore away from line L₁ as drawn. This means that if the package with such a deviating product will be suspended by the suspension means 10, the hinge line S will no longer extend horizontally, which is undesired. This can be solved for example through exchange of insert pieces in the mold, as described in WO2004/091882, and/or through insert pieces in the slide 24, as shown in Fig. 10 and explained below. Therewith, a series of packages 1 according to the invention can be manufactured in one and the same mold, having a slide 24, which can comprise different products or combinations of products and still, each time, can be suspended in approximately the same position by the suspension means and/or can be displayed on a display surface.

As appears from Figs. 1 - 4, the closing parts 2 and 3, as well as the hinge 4 may be curved such that the package 1 can be at least partly supported by the longitudinal edge 11 formed by the hinge 4 and/or by edges of the closing parts 2, 3 adjacent the hinge 4. Therefore, the package 1 can be standing on its bottom, for instance so that it is not necessary to suspend the package 1 from its suspension means 10.

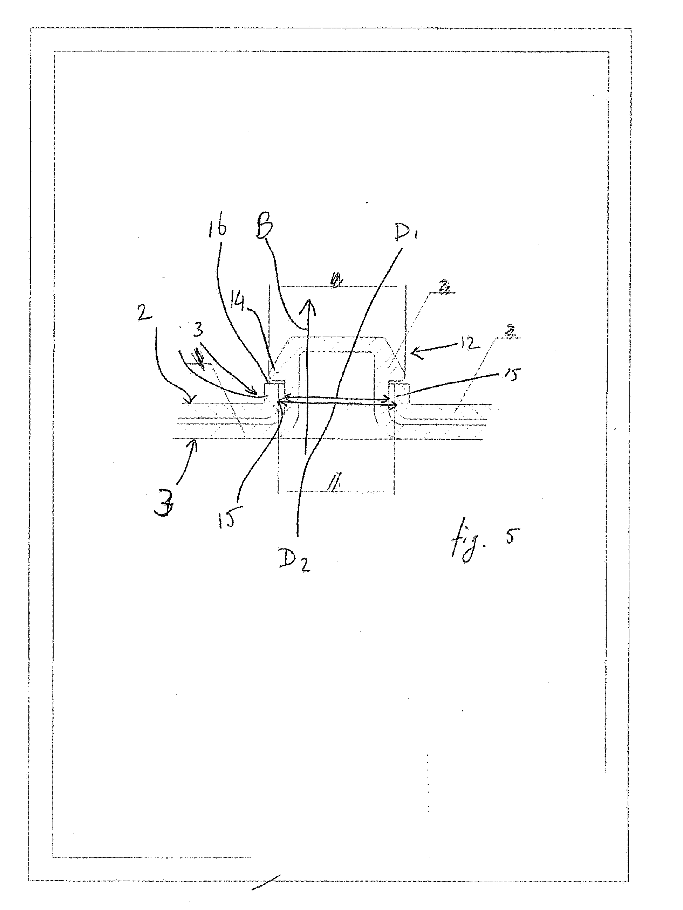

As shown in Fig. 4 and 5, the closing parts 2 and 3 may be provided with cooperating closing elements 12, 13, for instance projections 12 and/or recesses 13, respectively, which fit into each other. The outer diameter D1 of the projection 12 may be approximately equal to the inner diameter D2 of the recess 13, for example so that the inner surface 15 of the recess 13 surrounds and/or clamps the projection 12. One of the closing elements 12, 13 may be provided with a notch 14 for snapping into a fixed locking position. This fixed locking position is shown in Fig. 5. For example, the projection 12 may be provided with the notch 14 and/or may be provided in the front closing part 3, so that the front closing part 3 is pushed against, and partly in, the back closing part 2. In the locking position, the projection 13 may extend through the recess 13 and the notch 14 may abut an edge 16 of the recess 13.

In an embodiment, to establish a connection, the projection 12 is pushed through the recess 13, for example in a direction B towards the back of the package 1. During the pushing action, the inner surface 15 of the recess 13 and the notch 14 will partly give way to each other until the notch 14 has passed the edge 16 of the recess 13, after which the notch 14 snaps to the outside, into a locking position, so that it is prevented that the projection 12 will move back to be disconnected. With the aid of the closing elements 12, 13 comprising at least one notch 14, the package 1 can be closed relatively easy and efficient, enclosing a product 5 between the closing parts 2, 3, after which disconnection of the closing elements 12, 13 is prevented.

In the locking position the closing elements 12, 13 cannot be disconnected without breaking the package 1, because in an embodiment the edge 16 of the recess 13 will block passage of the notch 14. Hence, a tamper proof closing mechanism is achieved. In an embodiment, the package 1 is provided with one or more undercuts and/or perforations, i.e. one or more wall parts having reduced thickness with respect to the adjacent and/or adjacent wall thickness, along which one or more undercuts and/or perforations the package 1 will break when someone would try to open the package 1, for example by trying to disconnect the closing elements 12, 13 by force.

Preferably, the package 1 is provided with tamper proof closing elements 12, 13, wherein a part of the package 1 breaks when disconnecting the closing elements 12, 13. The package 1 can for example be provided with one, two, four, six, eight, or another number of corresponding closing elements 12,13.

It will be apparent to the skilled person that the recess 13 could also be shaped otherwise than shown in Fig. 5, for instance no upstanding wall 15 needs to be provided and/or a recess could be frusto-conically shaped. Also, the projection 12 could for example comprise an undercut instead of a notch 14, and the recess could be provided with a notch or an edge that snaps into said undercut, for example. Interconnecting closing elements 12, 13 can be provided in multiple manners.

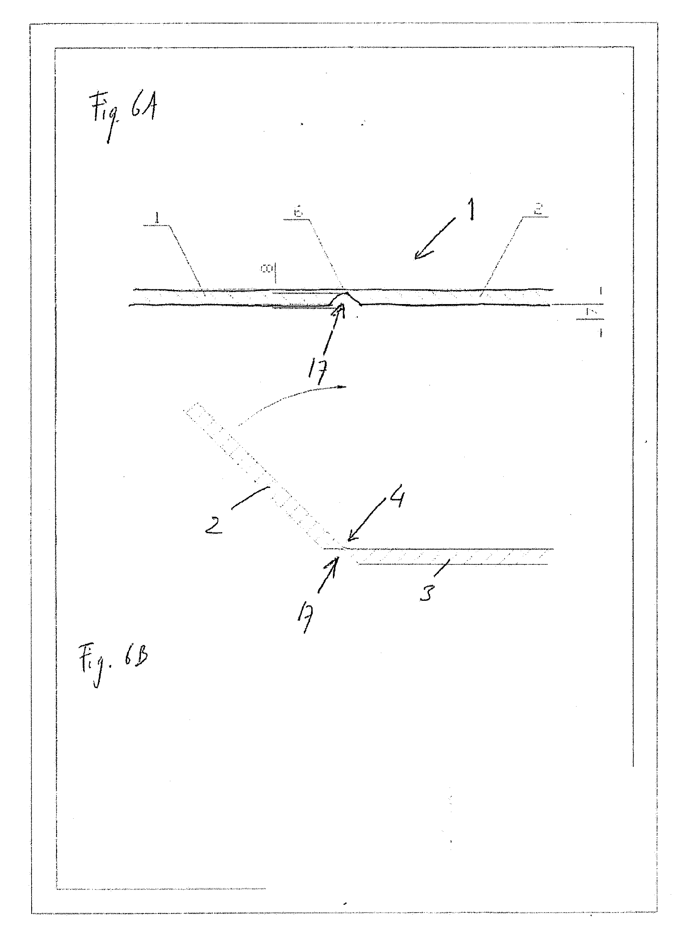

In an embodiment, the package 1 is provided with one or more undercuts 17, as can be seen from Fig. 6A and 6B. For example, the undercut 17 may be arranged to form a hinge 4, in particular a living hinge 4. The undercut 17 could for example also form a break or tearing line, along which a part of the package 1 will break when a pulling or pushing force is exerted to the package 1 near said undercut 17.

In an embodiment, undercuts 17 and/or perforations are arranged such that the package 1 breaks along a breaking or tearing line of undercuts and/or perforations when someone tries to pull the closing parts 2, 3 and/or elements 12, 13 from each other. Also the package 1 could be arranged to be opened by breaking and/or tearing the package 1 along said line. Said line can be arranged so that the product 5 still cannot be taken out of the package 1 after breakage along said line, in this way providing for tamper evidence with additional theft protection. In another embodiment, the line along which one or more undercuts 17 and/or perforations are arranged could be arranged so that the package 1 breaks near and/or around the closing elements 12, 13, so that the closing parts 2, 3 can be taken from each other and the package 1 can be opened easily.

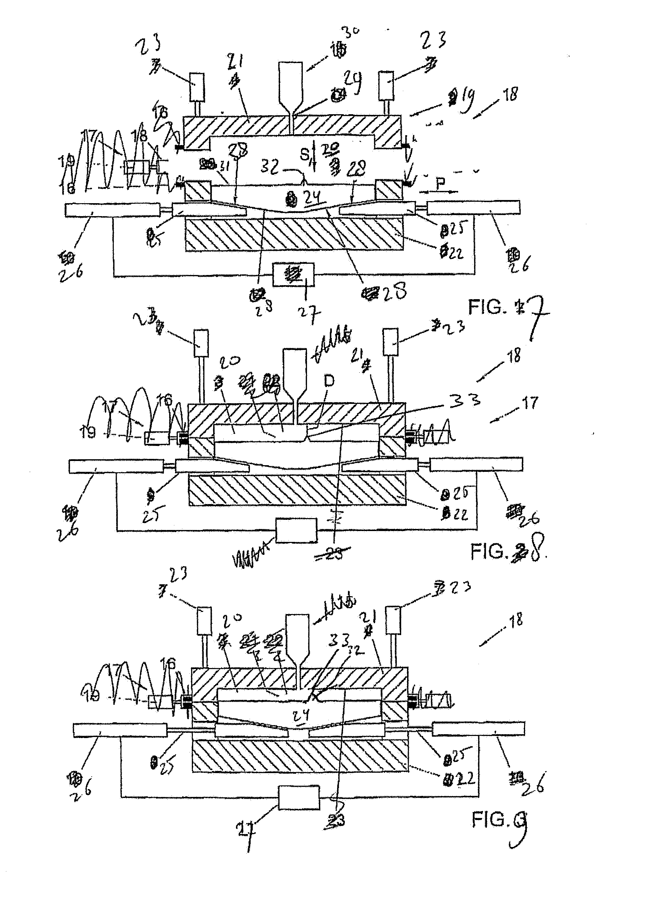

A method for manufacturing a package 1, for example one of abovementioned packages, is shown in Figs. 7 - 9. The method itself is also explained into more detail in international patent application WO2004024416. Fig. 7 - 9 show, in cross-sectional side view, an apparatus 18, provided with a mold 19 having a mold cavity 20, which apparatus 18 could be used for performing a method according to the invention. The mold 19 comprises a first, moveable part 21 and a second, complementary part 22, fixedly arranged. The moveable part 21 is moveable with the aid of devices suitable to that end, represented in Figs. 1-3 as piston-cylinder assemblies 23. It is clear that this may be any suitable device, for instance also a simple press, screw means such as spindles, link systems or the like. These can be of relatively light design as they are only meant for moving the part 21, virtually not for absorbing tensile or pressure forces in the further cycle.

A slide 24 is provided, preferably in the fixed part 22, which slide 24 is moveable in the direction S1 between a retracted position shown in Figs. 7 and 8, and an extended position shown in Fig. 9. For moving the slide 24, two wedges 25 may be provided, which may also be called wedge-shaped elements, which are moveable in a direction P with the aid of piston-cylinder assemblies 26 which are, for instance, hydraulically driven from a central control unit 27. The wedges 25 move in the direction P approximately at right angles to the direction S. At the underside, the slide 24 is provided with two surfaces 28 inclining in opposite directions, complementary to the top surfaces of the wedges 25, such that if the wedges 25 are moved inwards, towards each other, the slide 24 is moved upwards (directions viewed in the plane of the drawing) towards the extended position and vice versa. An inflow opening 29 terminates in the mold cavity 20 and is connected to an injection device 30, for instance a plasticizing device and, optionally, a pressing device.

As an example, on the top surface 31 of the slide 24, at least one rib 32 may be provided, e.g. at right angles to the plane of drawing, for example for forming an undercut 17 in the end product. The distance D between an end 33 of the rib 32 leading in the direction of movement, and the oppositely located surface of the mold cavity is set with the slide 24 retracted, depending on the desired product wall thickness and the plastic to be used, while the distance may for example be set to be larger according as the melt of the plastic is higher and/or the melting temperature of the plastic is lower.

With an apparatus according to Figs. 1- 3, a package 1, preferably a blister package can be formed from thermoplastic material, for instance comprising at least one hinge and/or tamper proof elements, as follows.

The mold 19 is closed from the position shown in Fig. 1, as shown in Fig. 2. The distance D is then set at a suitable value, such that the space in the mold cavity 20 is relatively large. Through the inflow opening 29, under relatively low pressure, plastic is introduced into the mold cavity 20, for instance at a pressure of between 1 and 10 bars excess pressure. The filling pressure is selected such that a desired, short feed time is achieved without the material properties of the plastic being adversely affected and without undesirably high pressure occurring in the mold cavity. Then, at a relatively high speed, the slide 24 is moved forward, in the direction of the extended position, as shown in Fig. 3, for example by moving the wedges 25. Here, the speed is selected dependent on the desired adiabatic heat development which should be such that the temperature of the plastic is at least substantially reduced to approximately the melting temperature thereof. Plastic that is, possibly, slightly solidified becomes liquid again and can be forced further into the mold so that a complete filling of the mold cavity is obtained while the product can have wall thicknesses which are, in fact, too small for the melt flow index of the respective plastic/product combination. Optionally, after moving the slide, some hold pressure can still be given with the aid of the injection device 29, so that undesired stresses can be pressed from the product. After that, the mold can be opened again and the product can be taken out.

With this method it has been surprisingly found that blister packages 1, in particular comprising tamper proof closing elements 12, 13 and/or undercuts 17 and/or perforations, can be manufactured relatively reliably and with a better material distribution as compared to conventional techniques such as for example blow molding or vacuum forming techniques. Also wall thicknesses can be reduced with respect to conventional wall thicknesses for conventional blister packages, while the pressures to be applied may remain relatively low. In particular, the undercuts 17, e.g. for the hinges 4, where the wall thickness D may be smaller than the adjacent wall thickness, can be achieved relatively reliably and secure, that is, without having negative influence on local strength and/or distribution and/or density of the thermoplastic material.

With conventional techniques it is difficult to achieve a uniform and accurate filling of the cavity, such that an undercut 17 and/or a line of perforations could have a high chance of locally causing breaking of the package 1. If for example a hinge 4 would locally break this could compromise the safety of the blister package 1, more particularly, this would make it easier to take the product 5 out of the package 1.

For example, using a method according to the invention, the wall thickness of a substantial part of the package is approximately 1.6 millimeter or less, preferably 1 millimeter or less, or approximately 0,8 millimeter or less. The wall thickness of the undercut may for example be less than 50%, preferably less than 30% of the wall thickness of the rest of the wall of the package 1, for example 0.5 millimeter or less.

In Fig. 10 a top view is shown of a mold part 22 having a slide 24 for producing a blister package 1. The slide 24 may comprise a first slide part 34 for forming the first closing part 2 and a second slide part 35 for forming the second closing part 3 of the package 1. A hinge forming part 36 may be provided for forming a hinge 4, in particular for forming an undercut 17. At the location of the undercut 17, the slide 24 may for example near the opposite surface of the mold at a distance D of approximately 0,5 millimetre or less. Further insert pieces 37 may also be provided, for example for forming suspension means 10 and/or deformations 6, 7. For example, second insert pieces 38, 39 may be provided for forming closing elements 12, 13, respectively.

It shall be obvious that the invention is not limited in any way to the embodiments that are represented in the description and the drawings. Many variations and combinations are possible within the framework of the invention as outlined by the claims. Combinations of one or more aspects of the embodiments or combinations of different embodiments are possible within the framework of the invention. All comparable variations are understood to fall within the framework of the invention as outlined by the claims.

## Claims

1. Method of manufacturing a plastic package in a mold,
wherein the package comprises a first and second closing part of which at least one comprises a cavity for receiving a product such that in use the closing parts enclose the packaged product,
wherein the mold comprises a mold cavity arranged for molding said product,
wherein in the mold cavity an amount of plastic is introduced in substantially plastic condition, whereupon at least one moveable element to be called a slide is moved at least partly into the respective mold cavity while compressing and/or displacing at least part of the plastic, while the speed of movement of the at least one slide is so high that adiabatic heat development occurs in the plastic, such that the plastic becomes more liquid, at least its viscosity is decreased, and the temperature of the plastic is at least substantially brought back to approximately the melting temperature thereof.

2. Method according to claim 1, wherein a hinge that connects the first and second closing parts is integrally formed.

3. Method according to claim 1 or 2, wherein the hinge comprises a living hinge having a reduced wall thickness.

4. Method according to any of the preceding claims, wherein the reduced wall thickness is less than 50% of the adjacent wall thickness, preferably the reduced wall thickness is 0.5 millimeter or less.

5. Method according to any of the preceding claims, wherein the wall thickness of a substantial part of the package is 1.6 millimeter or less, preferably 1 millimeter or less.

6. Method according to any of the preceding claims, wherein the package comprises a blister package.

7. Method according to any of the preceding claims, wherein closing elements are provided in each of the closing parts, which closing elements comprise a projection and a corresponding recess, wherein at least one of the closing elements comprises a notch for snapping into a fixed locking position.

8. Method according to claim 7, wherein during closure the notch snaps into a fixed locking position such that the closing elements are connected and cannot be disconnected without damaging the package.

9. Method according to claim 7 or 8, wherein at least one of the closing elements comprises a tamper proof closing element.

10. Method according to any of the preceding claims, wherein after the package is taken out of the mold a product is disposed in a receiving cavity, and the package is closed around the product.

11. Method according to any of the preceding claims, wherein the plastic is injection molded into the mold.

12. Blister package that is manufactured by a method according to any of the preceding claims.
